# EUROPEAN PATENT SPECIFICATION

(11) **EP 2 991 468 B1**
(45) Date of publication and mention of the grant of the patent: **18.07.2018**
(21) Application number: 13883452.8
(22) Date of filing: 29.04.2013
(51) Int. Cl.: A01C 1/02

(54) **IMPROVED METHOD FOR SEED PRIMING**
VERBESSERTES VERFAHREN ZUR VORKEIMUNG VON SAAT
PROCÉDÉ AMÉLIORÉ DE PRÉGERMINATION

(43) Date of publication of application: 09.03.2016
(73) Proprietor: Robust Seed Technology A&F Aktiebolag, 224 74 Lund (SE)
(72) Inventor: SHEN, Tongyun, 224 74 Lund (SE)
(74) Representative: Ström & Gulliksson AB
(86) International application number: PCT/SE2013/050475
(87) International publication number: WO 2014/178762

(56) References cited:
- EP-A1- 2 574 223
- WO-A1-94/05145
- WO-A1-2008/153388
- WO-A1-2009/002162
- US-A- 5 119 589
- US-A- 5 119 589
- US-B1- 6 421 956

## Description

### Field of the invention

The present invention relates to a method of seed priming, including immersion of a seed in an aqueous solution and subsequent incubation. Further, the invention relates to a device for incubating the seed.

### Background

The influence of seed quality on final yield of crops is well known. Seed priming is a naturally and environmental friendly way to improve the seed performance. It is effective for seeds with both low and high germination capacity. In seed priming, the basic metabolic reactions needed for the seed to germinate occur under conditions of high moisture, sufficient oxygen and suitable temperature. The germination process is typically interrupted by drying the primed seed before radical emergence, i.e. before the germination process is completed. Subsequent to drying the primed seed may be packed, stored, distributed and planted in the same manner as untreated seeds.

As have been established, seed priming has several advantages for crop production and forest planting. Primed seed usually results in more rapid and uniform emergence compared to unprimed seed. Further, primed seed germinated better across a wide range of temperature, adverse field conditions, such as salinity and limited water availability, than unprimed seeds. Priming also showed effect on breakdown seed dormancy in many vegetable species. The final yield increase by seed priming can lead to increased profits justifying the additional expense of priming treatment in many species. Thus there is a need for seed priming methods.

The priming methods of the art include hydro priming, osmotic priming and matrix priming. Among these priming methods, hydro priming has the advantage that saving both the cost for chemicals/matrix used during priming and labor to remove these materials after priming. However, hydro priming need more accurate technique to both produce good result and prevents seeds from germination during priming treatment.

To prevent the seeds from germinating during the priming, the water supplied to the seed and the incubation time have to be strictly controlled.

JP7289021 discloses a process for unifying the germination starting period of a seed and providing a high-performance coated seed capable having improved and stabilized germination performance. In the disclosed process, the seed is immersed in water to make the water content of the seed ≥30% dry weight. The prepared seed is retained in a vapor-phase environment having ≥50% relative humidity until just before germination to provide a method for unifying the germination starting period of seed.

US 6,421,956 discloses a method and apparatus for treating seed with a fluid, in particular water, involving the use of a fluid-containing gas, whereby seed is brought into contact with a gas having a controlled fluid content and the seed is kept in contact with the gas over a defined period whilst direct contact between the seed and the fluid in liquid form is substantially precluded. Prior to being exposed to fluid-containing gas, the seed may be wetted to lower the osmotic pressure of the seed.

In both these methods, if the seeds were saturated when contacted with water/fluid, the incubation time should be strictly controlled to prevent seeds germination during priming. If the imbibitions were aborted before the seeds being saturated, the limitation of water, especially embryo which is usually situated inside the endosperm or pericarp, limits the priming effect. Removing the seeds too early from imbibitions, may lead to even poorer germination performance than unprimed seeds.

Further, priming methods in art are disclosed in WO 94/05145, relating to a process for providing pre-germinated seeds comprising desiccation tolerant emerged radicles, WO 2009/002162 relating to a method for removing germination inhibitors from plant seeds, and US 5,119,589, relating to seed priming by progressive hydration in a rotating drum.

Thus, there is a need for a seed priming method overcoming deficiencies of the art.

### Summary

Consequently, the present invention seeks to mitigate, alleviate, eliminate or circumvent one or more of the above-identified deficiencies in the art and disadvantages singly or in any combination by providing a method of seed priming according to claim 1, wherein seeds to be primed are immersed into an aqueous solution and removed once the seeds have been saturated with water. The immersion time is at least equal to the time required for the seed to enter the phase II of germination, but shorter than the time required for the seed to enter phase III of germination. Before incubating the seeds under an atmosphere of air having a relative humidity of at least 95%, but less than 100%, the water content of the seeds are reduced by 1 to 10 wt.%.

By saturating the seeds with water, the seeds are provided with sufficient water for the metabolic processes to be initiated and to proceed. In order to prevent the seeds from complete the germination process their water content are reduced.

Another aspect of the invention relates to a device for incubating a seed according to claim 10 and in accordance with such a method. Such a device comprises a substantially horizontal, rotatable tumbling barrel with a lid. The lid is provided in downstream order with means for supplying water to a fresh air flow through the lid and the barrel, and means for removing water droplets from the air/water flow. Further, the barrel is provided with gas outlet. Such a device provide optimal conditions for seeds to undergo the preparing processes prior to complete germination by supply high and stable humidity, supply suffient oxygen and remove the unfavourable gas to each seed.

Further advantageous features of the invention are defined in the dependent claims. In addition, advantageous features of the invention are elaborated in embodiments disclosed herein.

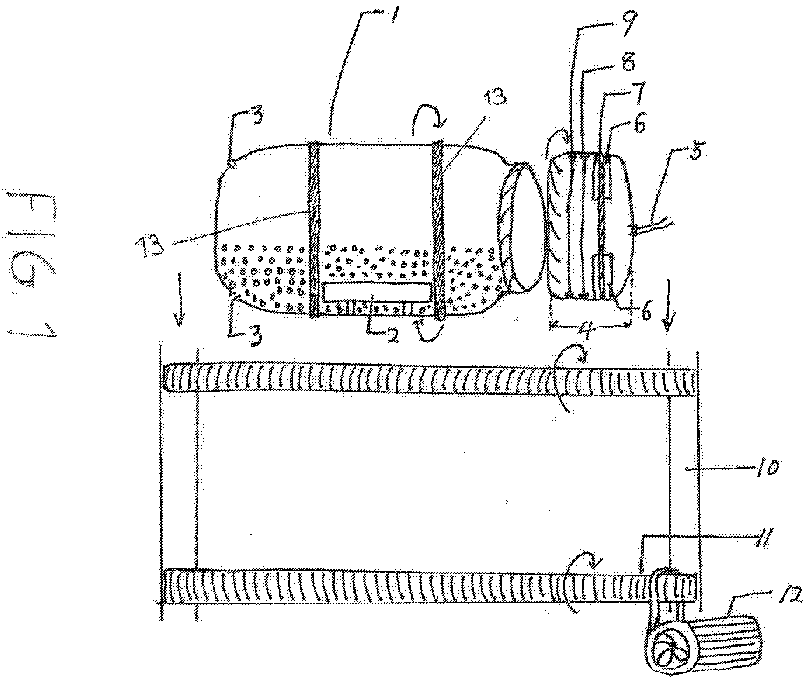

### Brief description of the drawing

The single figure on the enclosed drawing is a sketch of a tumbling device for performing an incubation step in a method according to the invention.

### Detailed description of preferred embodiments

The uptake of water by a mature dry seed during the germination process is triphasic. During the initial phase (phase I, imbibition) rapid uptake of water takes place until a plateau phase (phase II, lag phase) is reached. During the lag phase essentially no water is taken up. After the lag phase has been completed, phase III (germination, radical emergence) is initiated and water is once more being taken up by the seed. Once the seeds being contact with water, a series of metabolic process preparing the seeds for germination, occurring during both the imbibition and the lag phase (phase II), are initiated. The most active organ during the whole germination process is the embryo, thus, the efficient water uptake of embryo is very important.

In order to avoid germination in processes in the art (cf. JP7289021 and US 6,421,956), wherein seeds are immersed into water and subsequently incubated under an atmosphere having a high relative humidity, it is of outermost importance to control the immersion time, the osmotic pressure of the aqueous solution and the incubation time. If any of these parameters are miss-controlled, there is risk that seeds germinate during the priming process.

By shortening the immersion time, the moisture content may be kept a level lower than one required for the seed to enter phase II of the germination. Further, certain seeds, such as a seed from an endosperm specie, such as tomato, pepper, onion, castor bean, and wheat, seed from an gymnosperm species, such as Scots pine, Norway spruce, and ginkgo bilopa, or species with pericarp, such as sugar beet, carrot, and various grass species, have a delayed water transport from endosperm to the embryo of the seeds, or from pericarp to the seed inside the pericarp. Shortening the immersion time will limit the water uptake of embryo (in case of endosperm seed) or seeds (in case of seed with pericarp). This implies the risk of hampering the metabolic reactions taking place during germinating phase, as the seed organ situated inside the seed, such as embryo, have not fully entered the phase II. If a too short immersion time is being used, the seeds may even germinate poorer than unprimed seeds (both with longer germination time and lower germination capacity).

In seed priming processes wherein the seed is allowed to become saturated with water, strict control of the incubation phase is necessary to avoid germination. Typically, the incubation is aborted well before the metabolic preparation for germination has finished. Thus, complete priming is not obtained.

The present inventor has found that the risk for germination during priming may be minimized by reducing the moisture content of the seeds once imbibed and saturated by water, whereby both the embryo and the surrounded endosperm have got enough water to start the preparation process for germination. However, complete germination is prevented by the reduction of seed's moisture content.

During the moisture reduction after completed imbibition, the major part of the moisture lose occur in the surface organ of the seeds, such as endosperm (in case of endospermic seeds and gymnosperm seeds), and pericarp (in case of seeds surrounded with fruit part). While in the embryo, being the most active and important organ of the seed, the moisture content will remain sufficient for full metabolic process a time longer after moisture reduction as the water transport between seed organs take time.

One advantage of such a moisture reduction subsequent to the imbibition, is that the metabolic preparing process of germination may proceed nearly to completion, but completion of the germination, i.e. radical penetration through the seed surface, is inhibited due to the dryer hard surface of the seeds. Saturating the seed with water provides the seed enough water to start the preparation process for germination, while complete germination is prevented by reducing the moisture content of the seed.

According to the invention, a method of seed priming, in which the seed is allowed to become saturated with water during the immersion step and not requiring strict control of the subsequent incubation time, is provided. In such a method, the water content of the seed is reduced subsequent to the immersion step. By reducing the water content, phase III of the germination will not be initiated even if the incubation time is increased.

In such a method, a seed to be primed is first provided. Typically, the seed is dry or at least essentially dry. The seed is immersed into an aqueous solution and removed once it has been saturated with water. Immersing the seeds into an aqueous solution was found to be an effective way of quickly saturating the seeds with water. Further, immersion implies that all seeds being immersed have unlimited access to water and hence effectively may absorb water.

Stimulating hormones, such as Gibberelins, BAP, plant nutrients, such as Microplan, and/or salts, such as K₂NO₃, CaCI₂, NaCI, may be present in the aqueous solution. Such additives may contribute to breaking seed dormancy and producing strong and stress tolerant seedlings.

Immersing seeds in water with subsequent moisture reduction, may effectively remove growth/germination inhibitors present in the pericarp, such as sugar beet, such as carrot.

The immersion time is at least equal to the time required for the seed to enter the phase II of germination, but shorter than the time required for the seed to enter phase III of germination.

The time span for the immersion step for a given seed may be determined experimentally, such as by immersion of dry seeds from a species of interest and subsequently determining the moisture content of the seeds, such as in accordance with the ISTA rule. Once seeds contact to water, the seeds start to absorb water until they have been saturated. Thus, the time period for saturating the seed may be determined, corresponding to the lower limit for the immersion step. The upper time limit may be determined by incubating saturated seeds until germination takes place. Once a radical emerge, germination is deemed to have taken place. The difference between the lower and upper limit corresponds to the time needed for a seed to germinate, once saturated with water.

The aqueous solution is typically aerated during the immersion step. Except water, oxygen is also essential for seeds to complete germination. Like water uptake, oxygen uptake also have three phase: the sharp oxygen uptake phase (Phase I) is simultaneous with increased hydration/imbibitions. During this phase the oxygen attributed to activation of the respiration enzymes; during the lag phase (phase II), the oxygen uptake is slower than phase I, but increase during the whole phase in connection with respiration of the new synthesized mitochondria; a second sharp oxygen uptake (phase III) simultaneously with the radical emergence.

Shortage of oxygen supply during the germination period may lead to less energy production, which will limit the metabolic process during the germination. Serious oxygen deficiency can lead to fermentation, which will inhibit seed germination. Further, the CO2 accumulating during germination process can also limit, or seriously inhibit seeds respiration, and thus, limit the priming result.

To meet the oxygen demand during imbibitions, the present method, according to an embodiment, used aerate aqueous solution in the immerse step to optimize the priming effect.

Subsequent to the immersion step, the water content is reduced by 1 to 10 wt.%, preferably by 2 to 8 wt%. The water content may be reduced by about 5 wt.%. Drying with air having low relative humidity, such less than 40%, may be used. Further, vacuum, or low speed centrifugation at an RCF (relative centrifugal force) of not more than 500, or a combination thereof may also be used to reduce the water content. The drying may be performed at slightly elevated temperature, such as at temperature between 25 and 35°C.

It is to be noted that, for the endosperm seeds and gymnosperm seeds, the embryo are protected/surrounded by the endosperm. For the perisperm species, such as sugar beet, the embryo are protected by the pericarp, which is a dead part covering/protecting the seed inside. These kinds of seeds are therefore more tolerant to physical stress. Further, the immersion time is typically relatively short. Consequently, the biological processes have not progressed very long once the immersion is aborted. Therefore, the mild moisture reduction measures applied did not show any negative effect on subsequent germination to both endosperm seeds and seeds with pericarp.

Once the water content of the saturated seed has been reduced, the seed is incubated in order for the metabolic preparation for complete germination. The seeds are incubated under an atmosphere of air having a relative humidity of at least 95% but less than 100%. During the incubation the atmosphere of air is continuously, or discontinuously, replaced. The air has oxygen content of 15 to 25 vol%, preferably about 21 vol.%. In order to have the metabolic preparation for germination going as long as possible, the incubation time may be selected to be equal or longer than the time needed for a water saturated seed to germinate. The time needed for a water saturated seed to germinate may be determined as outlined above.

As mentioned above, except water, oxygen is also essential for seeds to complete germination. Lower oxygen levels or lack of oxygen supply during the germination period may lead to less energy production from respiration, which will limit the metabolic process. Serious oxygen deficiency can lead to fermentation, which will inhibit seed germination. Thus, the seeds are incubated under an atmosphere of air, whereby providing the seeds with oxygen for the respiration process.

In order to provide essentially equal conditions for each seed in the incubation step, if several seeds are to be primed simultaneously, as the case often is, the seed may be tumbled during the incubation step. Such tumbling may be performed in a rotating barrel provided with baffles. An embodiment, relates to rotating barrel provided with baffles for incubating seeds according to the present method.

A tumbling device for performing the incubation step is shown in the single figure on the enclosed drawing.

The seeds to be incubated are placed in a substantially horizontal tumbling barrel 1, preferably provided with one or more baffles 2 or the like for stirring the seeds at rotation of the barrel 1. The barrel 1 is provided with gas outlets 3 with a size preventing exit of seeds from the barrel. The barrel 1 may also be tilted, the rotation axis deviating less than 30°, such as less than 20° or less than 10°, from the horizontal plane.

The barrel 1 is provided with a closing lid 4, which also contains means for supplying air and humidity to the barrel. The lid 4 may be threadingly or otherwise connected to the barrel 1 in a sealing fashion. An inlet 5 for fresh air is provided on the lid 4. This inlet may be connected to a fresh air blower therefore (not shown), having means for controlling the gas pressure.

As will appear, the barrel 1 is arranged to be rotated, which means that relative rotation must be allowed either between the barrel 1 and the lid 4 or - preferably - between the lid 4 and the inlet 5 in a way well known to any person skilled in the art. In the latter case, the inlet 5 is preferably arranged centrally on the end surface of the lid 4, as shown in the figure.

Means for supplying water, such as one or more water containers 6, are arranged inside the inlet 5 in the lid 4 in conjunction with a sponge filter 7, so that water is immersed in the sponge filter and the fresh air is forced to pass through the water-saturated sponge filter 7 and absorb water. The water containers 6 may be replenished occasionally or be connected to an external water source. Alternatively, the sponge filter 7 may be kept saturated with water in another way.

The stream of air coming into the barrel 1 through the water-saturated filter 7 shall only have an appropriate moisture content, i.e. a relative humidity of at least 95% but less than 100%, and shall not contain any water droplets. For that reason, means for removing water droplets from the air/water flow, for example in the form of a semi permeable-membrane 8 of for example GoreTex®, are arranged in the lid 4 downstream of the filter 7. A nylon net or like 9 may be arranged downstream the semi- permeable membrane 8 to prevent direct contact between the seeds and the semi- permeable membrane for maintaining the permeability of semi-permeable membrane.

The barrel 1 is preferably to be rotated during the incubation process. This may be brought about by means of a stand 10, which is depicted in the lower part of the figure and on which the barrel 1 with the lid 4 is to be placed, as is indicated by vertical arrows.

The stand 10 has rotatably journalled drive rods 11, one or both of which may be rotated by means of an electric motor 12 or the like. The rotative speed is preferably low, say 1-2 rpm. The barrel 1 may be provided with friction bands 13 for engagement with the drive rods 11, which may also have a friction coating or the like.

The incubation in the barrel is controlled by air pressure indicator (not shown) in such a way that the desired relative humidity and oxygen content are attained.

During the water uptake phase and lag phase, during which various metabolic processes take place, oxygen is being consumed by the seed. Further, various gaseous substances are emitted. It may thus be advantageous to continuously, or discontinuously, replacing the atmosphere of air during the incubation step. The herein disclosed tumbling device has means for continuously replacing the atmosphere of air during the incubation step.

Further, oxygen is being consumed by the seed also during metabolic processes initiated during the first phase of germination (phase I). It may thus be advantageous to aerate the aqueous solution during the immersion step. Further, aeration may contribute to facilitate diffusion of various components during the immersion step and to more even uptake of water by the seeds.

Subsequent to the incubating step the primed seed may be sowed. More commonly however, the water content of the primed seed will be reduced subsequent to the incubating step, in order to allow for storage and transport of the primed seed. The seeds may be dehydrated, i.e. the water content reduced, by drying the seeds with air. The relative humidity of the air is low, such as ≤40%, such as about 25%. Further, the drying may be performed at slightly elevated temperature, such as at temperature between 25 and 35°C. The water content of the seeds is preferably decreased to the same level as before immersion.

Various types of seed may be primed using the priming method disclosed herein. The method is especially suited for priming seeds from an endosperm specie, such as tobacco, tomato, pepper, castor bean, onion, wheat; a gymnosperm species, such as pine, spruce, ginkgo biloba; and a perisperm seed with/without a pericarp, such as sugar beet. Seed obtainable by the method disclosed herein will have decreased mean germination time, increased germination capacity and/or improved outdoor soil emergence and field performance.

Without further elaboration, it is believed that one skilled in the art can, using the preceding description, utilize the present invention to its fullest extent. The preferred specific embodiments described herein are, therefore, to be construed as merely illustrative and not limitative of the remainder of the description in any way whatsoever. Further, although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Experimental

The following examples are mere examples and should by no mean be interpreted to limit the scope of the invention. Rather, the invention is limited only by the accompanying claims.

### Determination of immersion time

The immersion time was determined by moisture content determination according to ISTA rule ((International Seed Test Association, Determination of moisture content in International rules for seed testing) (at determined interval until that the moisture content of seeds did not increase further. For Kentucky blue grass, the moisture content of the seeds did not increase any more after 135 minutes. So the immersion time is determined to be 135 minutes. After the immersion, the moisture content of the seed may also be determined, such as for Kentucky blue grass 50%.

### Determination of incubation time

The time needed for the seed to germinate, once saturated with water, was determined by incubating the seed without firstly reducing its water content. For Kentucky blue grass, the time needed for the seed to germinate, once saturated with water, was determined to be 84 hours.

### Immersion

The seeds (Paprika 20g, Wheat 500g, Scots Pine 100g, Kentucky blue grass 400g) were immersed in a bucket with discontinuously manual stirring in water (5 times the amount of seeds w/w) aerated with fresh air bubbles for a pre-determined immersion time (cf. above), such as 135 minutes for Kentucky blue grass

### Intermediate water reduction

The moisture of the seeds were reduced by- centrifugation for 6 minutes at RCF=500, and drying at 35% RH ambient condition to the moisture content of the seeds is 5 percentage of unit lower than the moisture content of fully saturated seeds. Such as to 45% for Kentucky blue grass.

### Incubation

After moisture reduction, the seeds were placed into a tumbling device (cf. enclosed drawing) and incubated under atmosphere of air having a relative humidity of 95% for a determined incubation time (cf. above), such as 84 hours for Kentucky blue grass.

### Drying

After incubation the seeds were dried at ambient with 30% RH at 30°C until the moisture content of the seeds reduced to the same moisture as before the immersion, such as 8.9% for Kentucky blue grass.

### Priming of seeds

Priming was performed according to the method described above for the 4 species (Paprika, Wheat, Scots pine, and Kentucky blue grass). The incubation time, incubation moisture content (MC) of seeds, dry seed moisture content (MC) and immersion time were determined according to the methods described above and summarized in table 1.

**Table 1. Priming treatment data**

| **Category** | **Species** | **Dry seed MC* (%)** | **Immersion time (min)** | **Incubation MC* (%)** | **Incubation time (hour)** |
|---|---|---|---|---|---|
| Vegetable | Paprika | 11.7 | 90 | 50 | 75 |
| Crop | Wheat | 14 | 240 | 30 | 24 |
| Forest | Scots pine | 6,5 | 250 | 30 | 60 |
| Grass | Kentucky blue grass | 8.9 | 135 | 50 | 84 |

| | | | | | |
|---|---|---|---|---|---|
| *MC=moisture content | | | | | |

### Results - Priming performance

The priming effect on decreasing mean germination time (MGT), increasing germination capacity (GC), as well as seedling emergence time, seedling length and seedling fresh weight for the various seed specie is presented in table 2. The seedling size (seedling length and seedling fresh weight) provided in table 2 were weight of various numbers of seedlings and length of seedlings recorded after various periods of times as indicated below:
- Paprika, length day 16, weight 30 seedlings;
- wheat, length day 8, weight, 10 seedlings;
- Scots pine, length day 15, weight 30 seedlings; and
- Kentucky blue grass, length day 15, weight 40 seedlings.

As can be seen from table 2, the current priming method significantly decreased MGT, and improved the germination capacity (except for wheat, which the GC kept same as unprimed seeds). The current priming also significantly improved outdoor emergence performance, such as shorted emergence time and increased seedling size.

**Table 2. Priming effect on germination time, germination capacity and seedling length and seedling weight**

| **Category** | **Species** | **Treatment** | **Lab Germination** | | | | **Soil emergence** | | | |
|---|---|---|---|---|---|---|---|---|---|---|
| | | | **MGT (h)** | **MGT decrease (%)** | **GC% primed** | **GC increase (%)** | **First count time (day)** | **GC(%) first count time control** | **seedling length (mm)** | **Fresh weight (g)** |
| Vegetable | Paprika | *Primed* | 104.7±3.8 | 36.1 | 94±1.4 | 8 | 11.5 | 86.7±14 | 55 | 1.08 |
| | | *Control* | 164±1.9 | | 86±1.4 | | 14.5 | 26.5±9.2 | 20 | 0.38 |
| *Crops* | *Wheat* | *Primed* | 64.6±0.3 | 18.9 | 86±2.8 | 0 | 4.1 | 72.5±17 | 77 | 1.51 |
| | | *Control* | 87.7±0.1 | | 86±0 | | 4.1 | 25±0 | 50 | 1.41 |
| *Forestry* | *Scots pine* | *Primed* | 89.9±0.6 | 16.5 | 99±0.7 | 4 | 8.8 | 43.4±4,7 | 56 | 1.12 |
| | | *Control* | 107.7±1.8 | | 95±2.1 | | 9.8 | 4.9±2.3 | 45 | 0.93 |
| *Grass* | Kentucky blue grass | *Primed* | 137.5±8.6 | 41.9 | 92.7±2.1 | 5.4 | 7 | 66.7±12 | 52.5 | 0.61 |
| | | *Control* | 236.8±8.1 | | 87.3±2.3 | | 11 | 5.8±5.8 | 12.5 | 0.38 |

## Claims

1. A method of seed priming comprising the steps of:
- providing a dry seed to be primed;
- immersing said seed into an aqueous solution;
- removing the seed from the aqueous solution once the seed has been saturated with water, wherein the immersion time at least is equal to the time required for the seed to enter the phase II of germination, but shorter than the time required for the seed to enter phase III of germination;
- reducing the water content of the seed by 1 to 10 wt.%; and
- incubating the seed under an atmosphere of air having a relative humidity of at least 95%, but less than 100%.

2. The method according to claim 1, wherein said seed is a seed from an endosperm specie, from a gymnosperm species, from a perisperm species or a seed with a pericarp.

3. The method according to any one of the claims 1 or 2, wherein the immersion time is equal to the time required for the seed to enter the phase II of germination.

4. The method according to any one of the preceding claims, wherein the aqueous solution is aerated, and optionally stirred continuously or discontinuously, during the immersion step.

5. The method according to any one of the preceding claims, wherein the water content is reduced by 2 to 8 wt.% in the step of reducing the water content of the seed saturated with water.

6. The method according to any one of the preceding claims, wherein the seed is incubated for a time period equal or longer than the time needed for a seed to germinate, once saturated with water.

7. The method according to any one of the preceding claims, wherein the seed is being tumbled during the incubation step.

8. The method according to any one of the preceding claims, wherein said atmosphere is being continuously or discontinuously replaced during the incubating step.

9. The method according to any one of the preceding claims, further comprising the step of reducing the water content of the seed after the step of incubating the seed.

10. A device for incubating a seed in accordance with the method according to claim 1 in an atmosphere of air with an oxygen content of preferably 21% and a relative humidity of at least 95%, but less than 100%, the device comprising a substantially horizontal, or tilted, rotatable tumbling barrel (1) with a lid (4), wherein the barrel (1) is provided with gas outlet (3), wherein the rotations axis of the barrel deviates less than 30° from the horizontal plane, **characterized in that** the lid (4) is provided in downstream order with means (6, 7) for supplying water to a fresh air flow through the lid (4) and the barrel (1), and means (8) for removing water droplets from the air/water flow.

11. The device according to claim 10, wherein the lid (4) is provided with a fresh air inlet (5), a sponge filter (7) saturated by water, and a semi-permeable membrane (8) for removing water droplets from the air/water flow.

12. The device according to claim 11, wherein the barrel (1) is rotated by means of drive rods (11), driven by a motor (12).

## Patentansprüche

1. Verfahren zum Vorkeimen von Samen, umfassend die Schritte:
- Bereitstellen eines vorzukeimenden trockenen Samens;
- Eintauchen des Samens in eine wässrige Lösung;
- Entfernen des Samens aus der wässrigen Lösung, sobald der Samen mit Wasser gesättigt ist; wobei die Eintauchzeit wenigstens der Zeit entspricht, die der Samen benötigt, um Phase II der Keimung zu erreichen, aber kürzer ist als die Zeit, die der Samen benötigt um in Phase II der Keimung einzutreten,
- Verringern des Wassergehalts des Samens um 1 bis 10 Gew.%, und
- Inkubieren des Samens unter Luftatmosphäre mit einer relativen Feuchtigkeit von mindestens 95%, jedoch weniger als 100%.

2. Verfahren gemäß Anspruch 1, wobei der Samen ein Samen einer Endosperm-Spezies einer Gymnosperm-Spezies, einer Perisperm-Spezies, oder ein Samen mit einem Perikarp ist.

3. Verfahren gemäß einem der Ansprüche 1 oder 2, wobei die Eintauchzeit der Zeit entspricht, die das Saatgut benötigt, um in Phase II der Keimung einzutreten.

4. Verfahren gemäß einem der vorhergehenden Ansprüche, wobei die wässrige Lösung während des Eintauchschritt belüftet und gegebenenfalls kontinuierlich oder diskontinuierlich gerührt wird.

5. Verfahren gemäß einem der vorhergehenden Ansprüche, wobei der Wassergehalt in dem Schritt des Verringerns des Wassergehalts des mit Wasser gesättigten Samens um 2 bis 8 Gew.-% verringert wird.

6. Verfahren gemäß einem der vorhergehenden Ansprüche, wobei der Samen für eine Zeitdauer inkubiert wird, die gleich oder länger ist als die Zeit, die ein Samen zum Keimen benötigt, sobald er mit Wasser gesättigt ist.

7. Verfahren gemäß einem der vorhergehenden Ansprüche, wobei der Samen während des Inkubationsschritts hin und her bewegt wird.

8. Verfahren gemäß einem der vorhergehenden Ansprüche, wobei die Atmosphäre während des Inkubationsschritts kontinuierlich oder diskontinuierlich ersetzt wird.

9. Verfahren gemäß einem der vorhergehenden Ansprüche, außerdem umfassend den Schritt des Verringerns des Wassergehalts des Samens nach dem Schritt des Inkubierens des Samens.

10. Vorrichtung zum Inkubieren eines Samens gemäß dem Verfahren nach Anspruch 1 in einer Luftatmosphäre mit einem Sauerstoffgehalt von vorzugsweise 21% und einer relativen Feuchtigkeit von mindestens 95%, jedoch weniger als 100%, wobei die Vorrichtung ein im Wesentlichen horizontales oder gekipptes, drehbares Rommelfass (1) mit einem Deckel (4) umfasst, wobei das Fass (1) mit einem Gasauslass (3) versehen ist, wobei die Drehachse des Fasses weniger als 30° von der horizontalen Ebene abweicht, **dadurch gekennzeichnet, dass** der Deckel (4) in nachgelagerter Reihenfolge mit Mitteln (6, 7) zum Zuführen von Wasser zu einem Frischluftstrom durch den Deckel (4) und das Fass (1), und mit einem Mittel (8) zum Entfernen von Wassertröpfchen aus dem Luft- / Wasser-Strom ausgestattet ist.

11. Vorrichtung gemäß Anspruch 10, wobei der Deckel (4) mit einem Frischlufteinlass (5), einem mit Wasser getränkten Schwammfilter (7) und einer semipermeablen Membran (8) zum Entfernen von Wassertröpfchen aus dem Luft- / Wasser-Strom versehen ist.

12. Vorrichtung gemäß Anspruch 11, wobei das Fass (1) mit Hilfe von Antriebsstangen (11), die von einem Motor (12) angetrieben werden, gedreht wird.

## Revendications

1. Procédé de prégermination de semence comprenant les étapes consistant à :
- fournir une semence sèche devant être prégerminée ;
- immerger ladite semence dans une solution aqueuse ;
- retirer la semence de la solution aqueuse une fois que la semence est saturée d'eau, dans lequel le temps d'immersion est au moins égal au temps qu'il faut à la semence pour entrer dans la phase II de germination, mais plus court que le temps qu'il faut à la semence pour entrer dans la phase III de germination ;
- diminuer la teneur en eau de la semence de 1 à 10 % en poids ; et
- incuber la semence sous une atmosphère d'air ayant une humidité relative d'au moins 95 %, mais inférieure à 100 %.

2. Procédé selon la revendication 1, dans lequel ladite semence est une semence issue d'une espèce à endosperme, d'une espèce à gymnosperme, d'une espèce à périsperme, ou est une semence avec un péricarpe.

3. Procédé selon l'une quelconque des revendications 1 ou 2, dans lequel le temps d'immersion est égal au temps qu'il faut à la semence pour entrer dans la phase II de germination.

4. Procédé selon l'une quelconque des revendications précédentes, dans lequel la solution aqueuse est aérée, et éventuellement agitée de façon continue ou discontinue durant l'étape d'immersion.

5. Procédé selon l'une quelconque des revendications précédentes, dans lequel la teneur en eau est diminuée de 2 à 8 % à l'étape de diminution de la teneur en eau de la semence saturée d'eau.

6. Procédé selon l'une quelconque des revendications précédentes, dans lequel la semence fait l'objet d'une incubation sur une période de temps égale ou supérieure au temps qu'il faut à une semence pour germer une fois qu'elle est saturée d'eau.

7. Procédé selon l'une quelconque des revendications précédentes, dans lequel la semence est agitée durant l'étape d'incubation.

8. Procédé selon l'une quelconque des revendications précédentes, dans lequel ladite atmosphère est remplacée de façon continue ou discontinue durant l'étape d'incubation.

9. Procédé selon l'une quelconque des revendications précédentes, comprenant en outre l'étape consistant à diminuer la teneur en eau de la semence après l'étape d'incubation de la semence.

10. Dispositif d'incubation d'une semence conformément au procédé selon la revendication 1, dans une atmosphère d'air ayant une teneur en oxygène de préférence égale à 21 % et une humidité relative d'au moins 95 %, mais inférieure à 100 %, le dispositif comprenant un tambour d'agitation (1) rotatif sensiblement horizontal ou incliné doté d'un couvercle (4), dans lequel le tambour (1) est équipé d'une sortie de gaz (3), dans lequel l'axe de rotation du tambour dévie de moins de 30° par rapport au plan horizontal, **caractérisé en ce que** le couvercle (4) est pourvu, dans un ordre vers l'aval, de moyens (6, 7) destinés à alimenter en eau un écoulement d'air frais à travers le couvercle (4) et le tambour (1), et de moyens (8) destinés à éliminer des gouttelettes d'eau de l'écoulement d'air/d'eau.

11. Dispositif selon la revendication 10, dans lequel le couvercle (4) est doté d'une entrée d'air frais (5), d'un filtre spongieux (7) saturé d'eau, et d'une membrane semi-perméable (8) destinée à éliminer des gouttelettes d'eau de l'écoulement d'air/d'eau.

12. Dispositif selon la revendication 11, dans lequel le tambour (1) est entraîné en rotation au moyen de tiges d'entraînement (11), entraînées par un moteur (12).
